# EUROPÄISCHE PATENTSCHRIFT

(11) **EP 2 066 752 B1**
(45) Veröffentlichungstag und Bekanntmachung des Hinweises auf die Patenterteilung: **14.12.2016**
(21) Anmeldenummer: 07764980.4
(22) Anmeldetag: 30.06.2007
(51) Int. Cl.: C09D 5/02, C09D 5/03, C09C 1/56, C09C 3/00, C09C 3/10, C09C 3/08, C09B 67/08, C09B 69/10, C09D 11/322, C09D 17/00, D21H 21/28

(54) **FARBIGE WÄSSRIGE POLYMERDISPERSION, DEREN HERSTELLUNG UND VERWENDUNG**
COLOURED AQUEOUS POLYMER DISPERSIONS, AND PRODUCTION AND USE OF SAME
DISPERSION POLYMÈRE AQUEUSE COLORÉE, SA PRODUCTION ET SON UTILISATION

(30) Priorität: 25.07.2006 DE 102006034239
(43) Veröffentlichungstag der Anmeldung: 10.06.2009
(73) Patentinhaber: Clariant International Ltd, 4132 Muttenz (CH)
(72) Erfinder: HEINRICHS, Franz-Leo, 86456 Gablingen (DE); BIALY, Anais, 65719 Hofheim (DE); SAITMACHER, Klaus, 65830 Kriftel (DE); RITTER, Josef, 65812 Bad Soden (DE)
(74) Vertreter: Mikulecky, Klaus
(86) Internationale Anmeldenummer: PCT/EP2007/005820
(87) Internationale Veröffentlichungsnummer: WO 2008/011963

(56) Entgegenhaltungen:
- EP-A- 1 081 195
- WO-A-2006/066809
- US-A- 5 401 780

## Beschreibung

Polymerdispersionen werden in vielen Anwendungen eingesetzt. Zur Einfärbung können sowohl Farbstoffe als auch Pigmente eingesetzt werden. Wegen der höheren Licht- und Wetterbeständigkeit werden Pigmente in wässrigen Applikationen bevorzugt. Bei pigmentierten Systemen sind aber vor allem die Stabilität der Präparation und die Fixierung auf dem Substrat oder im Bindemittel problematisch, ebenfalls ist die Farbwirkung und der Glanz nicht immer befriedigend. Um diesen Problemen zu begegnen ist es Stand der Technik, Pigmente mit polaren Beschichtungen zu versehen oder durch Zusätze zu stabilisieren.

So wird in der JP 2000 239 392 der Zusatz eines selbstemulgierenden Harzes in einem wasserverträglichen Lösemittel beschrieben. Bei dieser Behandlung bildet sich auf der Pigmentoberfläche ein Polymerfilm, der die Dispergierung des Pigmentes in wässrigen Systemen vereinfacht.

In der JP 2000 239 392 wird der Einsatz von Polyurethan/Acrylat-Dispersionen beschrieben. Der Zusatz solcher Polymerdispersionen zu einer Pigmentdispersion führt ebenfalls zu einer polaren Beschichtung. Die Pigmente sind stabil in Wasser und Lösemittel und zeigen gute Lagerstabilität. Solche Produkte werden für den Einsatz in Coatings oder Tinten empfohlen.

In der EP-A-1 614 721 werden Pigmente mit einem Polymer aus hydrophoben und hydrophilen Monomeren und Urethangruppen enthaltenden Verbindungen behandelt.

In der EP-A-1 035 178 wird eine chemische Oberflächenbehandlung zur Verbesserung der Lagerstabilität beschrieben, hierbei wird die Oberfläche von Russpartikeln durch Oxidation polarer eingestellt, damit ein Einsatz in Ink-Jet Tinten möglich wird.

Stabile Dispersionen lassen sich auch durch den Zusatz von grenzflächenaktiven Komponenten erzeugen.

Bei den bisher aufgeführten Verfahren wird Stabilität und Haftung optimiert, der Glanz wird jedoch kaum verbessert.

Wachsbeschichtungen sind auch für Pigmente bekannt, z.B. in US 5 298 355. Solche Präparationen ergeben aber aus Wasser appliziert keine beständigen Filme. Das Problem besteht darin, die richtige Balance zu finden. Grenzflächenaktive Substanzen verbessern die Stabilität, verringern aber die Wasserbeständigkeit des Auftrags, Polymerzusätze verbessern die Dispergierbarkeit und Haftung, können aber bei Farbe und Glanz nachteilig sein, Wachse geben den gewünschten Glanz, sind aber aus Wasser nur schwierig zu applizieren. Die WO 2006/066809 A offenbart wässrige Pigmentdispersionen, worin die Oberfläche des Pigments mit einem Polymer beschichtet wird, ohne dass freie Vinylverbindungen übrig bleiben, die mit einem weiteren Monomer reagieren könnten.

Es ist daher die Aufgabe gestellt, farbige, filmbildende Polymerdispersionen herzustellen, die lagerstabil sind und gute Haftung, Glanz, Farbwirkung und Witterungsbeständigkeit ergeben.

Es wurde gefunden, dass nachstehende Polymerdispersion diese Aufgabe überraschenderweise löst.

Gegenstand der Erfindung ist eine farbige Polymerdispersion, enthaltend als wesentliche Bestandteile
(a) ein Farbpolymer, hergestellt durch Polymerisation von Monomer A mit Monomer B, wobei
   Monomer A ein Pigment P bedeutet, das mit einem polymerisierbaren Wachs D beschichtet ist, bei dem die polymerisierbare Funktion eine ethylenisch ungesättigte Gruppe ist, und
   Monomer B eine ethylenisch ungesättigte Verbindung aus der Gruppe der Acrylate oder Methacrylate ist;
(b) mindestens ein nichtionisches oberflächenaktives Additiv E auf der Basis von Polyethern und/oder Polyglycerinen;
(c) mindestens ein anionisches oberflächenaktives Additiv F auf der Basis von Sulfonaten, Sulfaten, Phosphonaten, Phosphaten oder Carboxylaten;
(d) Wasser.

Bevorzugt sind Polymerdispersionen, gekennzeichnet durch 2 bis 60 Gew.-%, vorzugsweise 5 bis 45 Gew.-%, insbesondere 8 bis 35 Gew.-%, der Komponente (a), 0,1 bis 15 Gew.-%, vorzugsweise 0,1 bis 12 Gew.-%, insbesondere 0,5 bis 5 Gew.-%, der Komponente (b),
0,1 bis 15 Gew.-%, vorzugsweise 0,1 bis 10 Gew.-%, insbesondere 0,5 bis
2 Gew.-%, der Komponente (c),
10 bis 90 Gew.-%, vorzugsweise 10 bis 70 Gew.-%, insbesondere 10 bis 60 Gew.-%, Wasser (d),
0 bis 20 Gew.-%, vorzugsweise 0,01 bis 10 Gew.-%, insbesondere 0,1 bis 5 Gew.-%, üblicher Hilfsmittel (e),
wobei die Summe der Gewichtsprozente 100 Gew.-% nicht überschreitet.

In der erfindungsgemäßen Polymerdispersion kann das Pigment P ein organisches Buntpigment, ein anorganisches Buntpigment, ein Weißpigment, ein Rußpigment oder eine Kombination mehrerer Pigmente sein.

Das organische Buntpigment kann vorzugsweise ein Azopigment, ein Anthanthronpigment, ein Anthrapyrimidinpigment, ein Chinacridonpigment, ein Chinophthalonpigment, ein Diketopyrrolopyrrolpigment, ein Dioxazinpigment, ein Indanthronpigment, ein Isoindolinpigment, ein Isoindolinonpigment, ein Isoviolanthronpigment, ein Perylenpigment, ein Perinonpigment, ein Phthalocyaninpigment, ein Pyranthronpigment, ein Pyrazolochinazolonpigment, ein Thioindigopigment, ein Triarylcarboniumpigment oder eine Kombination davon sein.

Beispiele für Pigmente P sind:
Azopigmente:
   C.I. Pigment Yellow 12, 13, 14, 16, 17, 26, 74, 81, 83, 97, 106, 113, 120, 127, 151, 155, 174,176,180, 188, 213, 214;
Disazopigmente:
   C.I. Pigment Orange 16, 34, 44, 72, 108;
Disazokondensationspigmente:
   C.I. Pigment Red 144, 166, 214, 220, 221, 242, 262;
   C.I. Pigment Yellow 93, 95 und 128;
   C.I. Pigment Brown 23 und 41;
Anthanthronpigmente:
   C.I. Pigment Red 168;
Anthrachinonpigmente:
   C.I. Pigment Yellow 147, 177 und 199;
   C.I. Pigment Violet 31;
Anthrapyrimidinpigmente:
   C.I. Pigment Yellow 108;
Chinacridonpigmente:
   C.I. Pigment Orange 48 und 49;
   C.I. Pigment Red 122, 202, 206 und 209;
   C.I. Pigment Violet 19;
Chinophthalonpigmente:
   C.I. Pigment Yellow 138;
Diketopyrrolopyrrolpigmente:
   C.I. Pigment Orange 71, 73 und 81;
   C.I. Pigment Red 254, 255, 264, 270 und 272;
Dioxazinpigmente:
   C.I. Pigment Violet 23 und 37;
   C.I. Pigment Blue 80;
Flavanthronpigmente:
   C.I. Pigment Yellow 24;
   Indanthronpigmente: C.I. Pigment Blue 60 und 64;
   Isoindolinpigmente: C.I. Pigment Orange 61 und 69;
   C.I. Pigment Red 260;
   C.I. Pigment Yellow 139 und 185;
   Isoindolinonpigmente: C.I. Pigment Yellow 109, 110 und 173;
   Isoviolonthronpigmente: C.I. Pigment Violet 31;
   Metallkomplexpigmente: C.I. Pigment Red 257;
   C.I. Pigment Yellow 117, 129, 150, 133 und 177;
   C.I. Pigment Green 8;
   Perinonpigmente: C.I. Pigment Orange 43;
   C.I. Pigment Red 194;
   Perylenpigmente: C.I. Pigment Black 31 und 32;
   C.I. Pigment Red 123, 149, 178, 179, 190 und 224;
   C.I. Pigment Violet 29;
   Phthalocyaninpigmente: C.I. Pigment Blue 15, 15:1, 15:2,
   15:3, 15:4, 15:6 und 16;
   C.I. Pigment Green 7 und 36;
   Pyranthronpigmente: C.I. Pigment Orange 51;
   C.I. Pigment Red 216;
Pyrazolochinazolonpigmente:
   C.I. Pigment Orange 67;
   C.I. Pigment Red 251;
   Thioindigopigmente: C.I. Pigment Red 88 und 181;
   C.I. Pigment Violet 38;
Triarylcarboniumpigmente:
   C.I. Pigment Blue 1, 61 und 62;
   C.I. Pigment Green 1;
   C.I. Pigment Red 81, 81:1 und 169;
   C.I. Pigment Violet 1, 2, 3 und 27;
   C.I. Pigment Black 1 (Anilinschwarz);
   C.I. Pigment Yellow 101 (Aldazingelb);
   C.I. Pigment Brown 22.
Geeignete anorganische Farbpigmente sind z.B.:
   Weißpigmente: Titandioxid (C.I. Pigment White 6), Zinkweiß, Farbenzinkoxid; Zinksulfid,
Lithopone;
   Schwarzpigmente: Eisenoxidschwarz (C.I. Pigment Black 11), Eisen-Mangan-Schwarz, Spinellschwarz (C.I. Pigment Black 27); Ruß (C.I. Pigment Black 7); Buntpigmente:
   Chromoxid, Chromoxidhydratgrün; Chromgrün (C.I. Pigment Green 48);
   Cobaltgrün (C.I. Pigment Green 50);
   Ultramaringrün ; Kobaltblau (C.I. Pigment Blue 28 und 36; C.I. Pigment Blue 72);
   Ultramarinblau; Manganblau;
   Ultramarinviolett; Kobalt- und Manganviolett; Eisenoxidrot (C.I. Pigment Red 101);
   Cadmiumsulfoselenid (C.I. Pigment Red 108); Cersulfid (C.I. Pigment Red 265); Molybdatrot (C.I. Pigment Red 104); Ultramarinrot
   Eisenoxidbraun (C.I. Pigment Brown 6 und 7), Mischbraun, Spinell- und
   Korundphasen (C.I. Pigment Brown 29, 31, 33, 34, 35, 37, 39 und 40),
   Chromtitangelb (C.I. Pigment Brown 24),
   Chromorange; Cersulfid (C.I. Pigment Orange 75);
   Eisenoxidgelb (C.I. Pigment Yellow 42); Nickeltitangelb (C.I. Pigment Yellow 53;
   C.I. Pigment Yellow 157, 158, 159, 160,161, 162, 163, 164 und 189);
   Chromtitangelb; Spinellphasen (C.I. Pigment Yellow 119); Cadmiumsulfid und
   Cadmiumzinksulfid (C.I. Pigment Yellow 37 und 35); Chromgelb (C.I. Pigment
   Yellow 34); Bismutvanadat (C.I. Pigment Yellow 184).
   Cersulfid (C.I. Pigment Red 265);
   Molybdatrot (C.I. Pigment Red 104); Ultramarinrot.

Besonders bevorzugt ist Pigment P ein Gelb-, Cyan-, Magenta- oder Schwarz-Pigment.

Als Beispiele für üblicherweise als Füllstoffe eingesetzte anorganische Pigmente seien transparentes Siliciumdioxid, Quarzmehl, Aluminiumoxid, Aluminiumhydroxid, natürliche Glimmer, natürliche und gefällte Kreide und Bariumsulfat genannt.

Auch Glanzpigmente kommen in Betracht, wobei es sich um einphasig oder mehrphasig aufgebaute plättchenförmige Pigmente handelt, deren Farbenspiel durch das Zusammenspiel von Interferenz-, Reflexions- und Absorptionsphänomenen geprägt ist. Als Beispiele seien Aluminiumplättchen und ein- oder mehrfach, insbesondere mit Metalloxiden beschichtete Aluminium-, Eisenoxid- und Glimmerplättchen genannt.

Die mittlere Teilchengröße d₅₀ der Pigmente P liegt vorzugsweise bei einem Wert zwischen 50 und 500 nm, insbesondere zwischen 70 nm und 200 nm, besonders bevorzugt zwischen 70 und 150 nm.

Das polymerisierbare Wachs D ist vorzugsweise ein Umsetzungsprodukt aus einem Polyol, langkettigen aliphatischen Carbonsäuren und mindestens einer ethylenisch ungesättigten Carbonsäure, das durch den Zusatz einer Dicarbonsäure oligomerisiert sein kann.

Als langkettige aliphatische Carbonsäuren können alle Carbonsäuren mit mehr als 7 Kohlenstoffatomen eingesetzt werden, bevorzugt aber C₈-C₂₂-Fettsäuren und C₂₂-C₅₀-Wachssäuren, entweder in reiner Form oder aber bevorzugt in Form von Mischungen technischer Produkte wie z.B. Kokosfettsäure, Talgfettsäure, Sonnenblumensäure, Montanwachssäure, Paraffinoxidat oder Olefinoxidat. Die Mischung der Säuren ist meist so zusammengesetzt, dass der Schmelzpunkt der Mischung oberhalb von 50°C liegt. Zur Molgewichtsvergrößerung können die Mischungen der langkettigen Carbonsäuren noch mit geringen Anteilen an Dicarbonsäuren wie Adipinsäure, Dodecandisäure, Montanwachsdicarbonsäuren, versetzt sein.

Als Polyole können mehrwertige aliphatische Alkohole mit 2 bis 10 Kohlenstoffatomen und 2 bis 10 OH-Gruppen eingesetzt werden, wie Glykole, Glycerin, Trimethylolpropan, Glycerin, Pentaerythrit, Zuckeralkohole, Sorbitol und deren interne Ether wie Sorbitane, deren Oligomere wie Diglycerin, Dipentaerythrit, deren Polymere wie Polyglykole oder Polyglycerine oder die Alkoxylate der genannten Polyole.

Als ethylenisch ungesättigte Carbonsäuren können beispielsweise Acrylsäure, Methacrylsäure, Maleinsäure, Fumarsäure oder Itaconsäure, sowie deren Anhydride oder Ester eingesetzt werden. Die Stöchiometrie wird so gewählt, dass ein Mol Polyol-Fettsäure-Partialester mit einem Mol der ungesättigten Carbonsäure umgesetzt wird.

Das polymerisierbare Wachs D sei beispielhaft dargestellt am Umsetzungsprodukt aus Pentaerythrit, einer Mischung langkettiger aliphatischer Carbonsäuren auf Basis technischer Montanwachssäure und Acrylsäure: 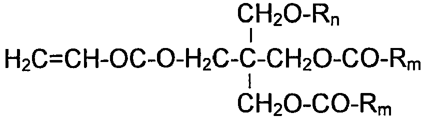 Rₙ = H, CO-Rₘ, Rₘ = Alkylrest der Montanwachssäure

Die Herstellung des polymerisierbaren Wachses D kann so erfolgen, indem das Polyol mit der langkettigen aliphatischen Carbonsäure zu einem Partialester umgesetzt wird, dieser kann durch Veresterung mit einer Dicarbonsäure noch zu einem Polyesterwachs weiter umgesetzt werden. An diese Partialesterkomponente wird dann noch eine ethylenisch ungesättigte Säure über Veresterung gebunden, so dass ein festes reaktives Produkt mit einem Schmelzpunkt zwischen 40 und 90°C entsteht. Derartige reaktive Verbindungen sind bekannt und im Handel z.B. unter dem Namen ®Licomont ER 165 (Clariant) erhältlich.

Als Monomer B werden Verbindungen eingesetzt, die mit der ethylenisch ungesättigten funktionellen Gruppe der Beschichtungskomponente D reagieren können und aus der Gruppe Acrylsäure, Methacrylsäure, Ester der Acrylsäure, insbesondere Methylacrylat, Ethylacrylat, Butylacrylat, 2-Ethylhexylacrylat, Hydroxyalkylacrylate, Acrylate von Polyolen, Ester der Methacrylsäure, insbesondere Methylmethacrylat und Hydroxyalkylester und Polyolester sind.

Das erfindungsgemäße Polymer a) besteht im wesentlichen aus 5 bis 95 Gew.-%, vorzugsweise 20 bis 70 Gew.-%, insbesondere 30 bis 60 Gew.-%, aus Pigment P, aus 2,5 bis 50 Gew.-%, vorzugsweise 5 bis 40 Gew.-%, insbesondere 10 bis 30 Gew.-%, aus dem mit Monomer B umgesetzten Wachs D, und zu 2,5 bis 50 Gew.-%, vorzugsweise 5 bis 40 Gew.-%, insbesondere 10 bis 30 Gew.-%, aus dem mit D umgesetzten Monomer B.

Als Additiv E enthalten die erfindungsgemäßen Polymerdispersionen mindestens ein nichtionisches oberflächenaktives Additiv auf der Basis von Polyethern oder Polyglycerinen. Bei den Polyethern handelt es sich insbesondere um Polyalkylenoxide oder Umsetzungsprodukte von Alkylenoxiden mit Alkoholen, Aminen, aliphatischen Carbonsäuren oder aliphatischen Carbonsäureamiden. Erfindungsgemäß soll dabei unter dem Begriff Alkylenoxid auch arylsubstituiertes Alkylenoxid, insbesondere phenylsubstituiertes Ethylenoxid, verstanden werden. Neben den ungemischten Polyalkylenoxiden, vorzugsweise C₂-C₄-Alkylenoxide und phenylsubstituierte C₂-C₄-Alkylenoxide, insbesondere Polyethylenoxiden, Polypropylenoxiden und Poly(phenylethylenoxide), sind vor allem Alkylenoxidblockcopolymere, aber auch statistische Copolymere dieser Alkylenoxide geeignet. Ganz besonders geeignet sind dabei Blockcopolymere, die Polypropylenoxid- und Polyethylenoxidblöcke oder auch Poly(phenylethylenoxid)- und Polyethylenoxidblöcke aufweisen. Sie können wie die ungemischten Polyalkylenoxide durch Polyaddition der Alkylenoxide an Starterverbindungen, wie gesättigte oder ungesättigte aliphatische und aromatische Alkohole, gesättigte oder ungesättigte aliphatische und aromatische Amine, gesättigte oder ungesättigte aliphatische Carbonsäuren und Carbonsäureamide, erhalten werden. Bei Einsatz von Ethylenoxid und Propylenoxid können diese Starterverbindungen zunächst mit Ethylenoxid und dann mit Propylenoxid oder zunächst mit Propylenoxid und dann mit Ethylenoxid umgesetzt werden. Üblicherweise werden 1 bis 300 mol, bevorzugt 3 bis 150 mol, Alkylenoxid je mol Startermolekül eingesetzt. Geeignete aliphatische Alkohole enthalten dabei in der Regel 6 bis 26 C-Atome, bevorzugt 8 bis 18 C-Atome, und können unverzweigt, verzweigt oder cyclisch aufgebaut sein. Als Beispiele seien Octanol, Nonanol, Decanol, Isodecanol, Undecanol, Dodecanol, 2-Butyloctanol, Tridecanol, Isotridecanol, Tetradecanol, Pentadecanol, Hexadecanol, 2-Hexyldecanol, Heptadecanol, Octadecanol, 2-Heptylundecanol, 2-Octyldecanol, 2-Nonyltridecanol, 2-Decyltetradecanol, Oleylalkohol und 9-Octadecenol sowie auch Mischungen dieser Alkohole wie C₁₂/C₁₀-, C₁₃/C₁₅- und C₁₆/C₁₈-Alkohole, und Cyclopentanol und Cyclohexanol genannt. Von besonderem Interesse sind die gesättigten und ungesättigten Fettalkohole, die durch Fettspaltung und Reduktion aus natürlichen Rohstoffen gewonnen werden, und die synthetischen Fettalkohole aus der Oxosynthese. Die Alkylenoxidaddukte an diese Alkohole weisen üblicherweise mittlere Molekulargewichte Mn von 200 bis 5000, vor allem von 400 bis 2000 auf.

Als Beispiele für die oben genannten aromatischen Alkohole seien neben alpha- und ß-Naphthol und deren Alkylderivaten insbesondere Phenol und seine

Alkylderivate, wie Hexylphenol, Heptylphenol, Octylphenol, Nonylphenol, Isononylphenol, Undecylphenol, Dodecylphenol, Di- und Tributylphenol und Dinonylphenol genannt.

Geeignete aliphatische Amine entsprechen den oben aufgeführten aliphatischen Alkoholen. Besondere Bedeutung haben auch hier die gesättigten und ungesättigten Fettamine, die vorzugsweise 14 bis 20 C-Atome aufweisen. Als aromatische Amine seien beispielsweise Anilin und seine Derivate genannt. Als aliphatische Carbonsäuren eignen sich insbesondere gesättigte und ungesättigte Fettsäuren, die bevorzugt 14 bis 20 C-Atome enthalten, und hydrierte, teilhydrierte und unhydrierte Harzsäuren sowie auch mehrwertige Carbonsäuren, z.B. Dicarbonsäuren, wie Maleinsäure.

Geeignete Carbonsäureamide leiten sich von diesen Carbonsäuren ab.

Neben den Alkylenoxidaddukten an diese einwertigen Amine und Alkohole sind die Alkylenoxidaddukte an mindestens bifunktionelle Amine und Alkohole von ganz besonderem Interesse.

Als mindestens bifunktionelle Amine sind zwei- bis fünfwertige Amine bevorzugt, die insbesondere der Formel H₂N-(R-NR¹)n-H (R: Alkylen; R¹: Wasserstoff oder C₁-C₆-Alkyl; n: 1 bis 5) entsprechen. Im Einzelnen seien beispielhaft genannt: Ethylendiamin, Diethylentriamin, Triethylentetramin, Tetraethylenpentamin, Propylendiamin-1,3, Dipropylentriamin, 3-Amino-1-ethylenaminopropan, Hexamethylendiamin, Dihexamethylentriamin, 1,6-Bis-(3-aminopropylamino)hexan und N-Methyldipropylentriamin, wobei Hexamethylendiamin und Diethylentriamin besonders bevorzugt sind und Ethylendiamin ganz besonders bevorzugt ist. Vorzugsweise werden diese Amine zunächst mit Propylenoxid und anschließend mit Ethylenoxid umgesetzt. Der Gehalt der Blockcopolymere an Ethylenoxid liegt üblicherweise bei etwa 10 bis 90 Gew.-%. Die Blockcopolymere auf Basis mehrwertiger Amine weisen in der Regel mittlere Molekulargewichte Mn von 1000 bis 40000, vorzugsweise 1500 bis 30000, auf.

Als mindestens bifunktionelle Alkohole sind zwei- bis fünfwertige Alkohole bevorzugt Beispielsweise seien C₂-C₃-Alkylenglykole und die entsprechenden Di- und Polyalkylenglykole, wie Ethylenglykol, Propylenglykol- 1,2 und -1,3, Butylenglykol-1,2 und -1,4, Hexylenglykol-1,6, Dipropylenglykol und Polyethylenglykol, Glycerin und Pentaerythrit genannt, wobei Ethylenglykol und Polyethylenglykol besonders bevorzugt und Propylenglykol und Dipropylenglykol ganz besonders bevorzugt sind.

Besonders bevorzugte Alkylenoxidaddukte an mindestens bifunktionelle Alkohole weisen einen zentralen Polypropylenoxidblock auf, gehen also von einem Propylenglykol oder Polypropylenglykol aus, das zunächst mit weiterem Propylenoxid und dann mit Ethylenoxid umgesetzt wird. Der Gehalt der Blockcopolymere an Ethylenoxid liegt üblicherweise bei 10 bis 90 Gew.-%.

Die Blockcopolymere auf Basis mehrwertiger Alkohole weisen im allgemeinen mittlere Molekulargewichte Mn von 1000 bis 20000, vorzugsweise 1000 bis 15000, auf.

Derartige Alkylenoxidblockcopolymere sind bekannt und im Handel z.B. unter den Namen Tetronic® und Pluronic® (BASF) erhältlich.

In Abhängigkeit von dem Anwendungsmedium, in dem die erfindungsgemäßen Pigmentzubereitungen eingesetzt werden sollen, wählt man

Alkylenoxidblockcopolymere mit unterschiedlichen HLB-Werten (Hydrophilic-Lipophilic Balance) aus.

So sind für den Einsatz in wässrigen, wässrig/alkoholischen und alkoholischen Systemen Alkylenoxidblockcopolymere mit HLB-Werten von etwa 10 bevorzugt, was einem Ethylenoxidanteil an den Copolymeren von in der Regel 25 Gew.-% entspricht.

Bei den Polyglycerinen handelt es sich insbesondere um Glyceride von Fettsäuren, wie Polyglycerin-polyricinoleat.

Als Additiv F enthalten die erfindungsgemäßen Polymerdispersionen mindestens ein anionisches oberflächenaktives Additiv auf der Basis von Sulfonaten, Sulfaten, Carboxylaten, Phosphonaten oder Phosphaten. Beispiele für geeignete Sulfonate sind aromatische Sulfonate, wie p-C₃-C₉-Alkylbenzolsulfonate, Di-(C₁-C₈-alkyl)naphthalin-sulfonate und Kondensationsprodukte von Naphthalinsulfonsäuren mit Formaldehyd, und aliphatische Sulfonate, wie C₁₃-C₁₈-Alkansulfonate, alpha-Sulfo-fettsäure-C₂-C₈-alkylester, Sulfobernsteinsäureester und Alkoxy-, Acyloxy- und Acylaminoalkan-sulfonate.

Bevorzugt sind Alkylsulfonate, wobei die Di-(C₁-C₈-alkyl)naphthalinsulfonate besonders bevorzugt sind. Ganz besonders bevorzugt sind Diisobutyl- und

Diisopropylnaphthalin-sulfonat. Beispiele für geeignete Sulfate sind C₈-C₁₁-Alkylsulfate.

Eine weitere wichtige Gruppe anionischer Additive bilden die Sulfonate, Sulfate, Phosphonate und Phosphate der als nichtionische Additive genannten Polyether. Diese können durch Umsetzung mit Phosphorsäure, Phosphorpentoxid und Phosphonsäure bzw. Schwefelsäure und Sulfonsäure in die Phosphorsäuremono- oder -diester und Phosphonsäureester bzw. die Schwefelsäuremonoester und Sulfonsäureester überführt werden. Diese sauren Ester liegen, wie die weiter oben aufgeführten Sulfonate und Sulfate, bevorzugt in Form wasserlöslicher Salze, insbesondere als Alkalimetallsalze, vor allem Natriumsalze und Ammoniumsalze vor, sie können jedoch auch in Form der freien Säuren eingesetzt werden. Bevorzugte Phosphate und Phosphonate leiten sich vor allem von alkoxylierten, insbesondere ethoxylierten, Fett- und Oxoalkoholen, Alkylphenolen, Sterylphenolen, Fettaminen, Fettsäuren und Harzsäuren ab, bevorzugte Sulfate und Sulfonate basieren insbesondere auf alkoxylierten, vor allem ethoxylierten, Fettalkoholen, Alkylphenolen und Aminen, auch mehrwertigen Aminen, wie Hexamethylendiamin.

Derartige anionische oberflächenaktive Additive sind bekannt und im Handel z.B. unter den Namen Nekal® (BASF), Tamol® (BASF), Crodafos® (Croda), Rhodafac® (Rhodia), Maphos® (BASF), Texapon® (Cognis), Empicol® (Albright & Wilson), Matexil® (ICI), Soprophor® (Rhodia), Lutensit® (BASF) und Dispersogen (Clariant) erhältlich.

Übliche Hilfsmittel (e) sind beispielsweise Konservierungsmittel, pH-Regulatoren, Verdicker, Retentionsmittel und Entschäumer.

Zur Herstellung der erfindungsgemäßen Polymerdispersionen können verschiedene Verfahren eingesetzt werden:
Verfahren 1 ist dadurch gekennzeichnet, dass das Pigment P in wässriger Suspension mit zumindest einem Teil der Komponenten b) und c) unter Einwirkung von Scherkräften feinverteilt wird, die so hergestellte Pigmentdispersion mit dem polymerisierbaren Wachs D, gegebenenfalls einem Teil von Monomer B, und gegebenenfalls unter Zugabe weiterer Komponente b) und/oder c) bei einer Temperatur oberhalb des Erweichungspunktes von D homogenisiert wird, die so hergestellte gecoatete Pigmentdispersion mit einer Mischung aus Wasser, Monomer B, und gegebenenfalls weiterer Komponente b) und/oder c) versetzt und polymerisiert wird.

Zur Polymerisation wird gegebenenfalls ein üblicher Polymerisationsstarter zugesetzt, die Mischung auf eine Temperatur zwischen 70 und 90 °C gebracht und gegebenenfalls weiteres Monomer B zudosiert.

Verfahren 2 ist dadurch gekennzeichnet, dass aus dem geschmolzenem polymerisierbaren Wachs D, den Komponenten b) und c) eine Miniemulsion hergestellt wird, welche dann zusammen mit einer wässrigen Suspension des Pigments P einer Feinverteilung unter Einwirkung von Scherkräften unterzogen wird, die so hergestellte gecoatete Pigmentdispersion mit einer Mischung aus Wasser, Monomer B, und gegebenenfalls weiterer Komponente b) und/oder c) versetzt und polymerisiert wird.

Zur Polymerisation wird gegebenenfalls ein üblicher Polymerisationsstarter zugesetzt, die Mischung auf eine Temperatur zwischen 70 und 90 °C gebracht und gegebenenfalls weiteres Monomer B zudosiert.

In einer bevorzugten Ausführungsform von Verfahren 1 wird das Pigment zunächst in wässriger Suspension mit zumindest einem Teil des Additivs E und F einer Nasszerkleinerung unterworfen. Die so hergestellte Pigmentdispersion wird mit flüssigem Wachs D, gegebenenfalls einem Teil von Monomer B, und weiteren Additiven E und F bei Temperaturen oberhalb des Schmelzpunktes des Wachses dispergiert. Zur Dispergierung können offene Gefäße mit einfachen Rühraggregaten eingesetzt werden, es können aber auch Dispergatoren wie sie aus der Lackherstellung bekannt sind, Hochdruckhomogenisatoren oder andere Druck-Mischkammerverfahren (Vortex) eingesetzt werden. Bei dieser Behandlung zieht das flüssige Wachs auf das Pigment auf, die beschichteten Partikel werden durch die Additive E und F stabilisiert. Es entsteht eine gecoatete Pigmentdispersion.

In einem Polymerisationsreaktor werden Wasser und Emulgatoren aus der Gruppe der Additive F und ein Teil der Monomere B vorgelegt und auf etwa 70 bis 80°C erwärmt, dann wird ein Starter zugesetzt und auf 75 bis 90°C erwärmt. Nach dem Start der Reaktion wird restliches Monomer B dosiert. In die Reaktionsmischung wird dann die oben aufgeführte gecoatete Pigmentdispersion eindosiert. Nach der Zugabe kann noch weiteres Monomer B zudosiert werden. Nach der Umsetzung wird abgekühlt, der pH-Wert auf neutral eingestellt und konserviert.

In einer bevorzugten Ausführungsform von Verfahren 2 wird aus dem geschmolzenen Wachs D und Additiven der Gruppen E und F zunächst eine Miniemulsion hergestellt, die nach Abkühlung dann mit weiteren Additiven E und F versetzt und zusammen mit einer wässrigen Suspension des Pigments einer Nasszerkleinerung unterworfen wird. Bei diesem Verfahren wird das Wachs auf die Pigmentteilchen aufgemahlen. Es entsteht eine gecoatete Pigmentdispersion. In einem Polymerisationsreaktor werden Wasser und Emulgatoren aus der Gruppe der Additive F und ein Teil der Monomere B vorgelegt und auf etwa 70 bis 80°C erwärmt, dann wird ein Starter zugesetzt und auf 75 bis 90°C erwärmt. Nach dem Start der Reaktion wird restliches Monomer B dosiert. In die Reaktionsmischung wird dann die oben aufgeführte gecoatete Pigmentdispersion eindosiert. Nach der Zugabe kann noch weiteres Monomer B zudosiert werden. Nach der Umsetzung wird abgekühlt, der pH-Wert auf neutral eingestellt und konserviert.

Als Starter werden anorganische oder organische Radikalbildner eingesetzt. Bevorzugt werden wasserlösliche anorganische Starter wie Ammoniumperoxodisulfat oder Natriumperoxodisulfat eingesetzt, organische Starter wie AIBN oder organische Peroxide sind ebenfalls geeignet.

Bei Peroxodisulfaten als Starter ist eine Temperatur von etwa 80°C für die Reaktion optimal, bei organischen Peroxiden wird die Temperatur an das Optimum des Starters angepasst.

Bei beiden Verfahren resultiert eine Polymerdispersion, bei der die Pigmentpartikel über die gut haftende feste Wachsschicht chemisch in das Polymer eingebunden sind und in der die Partikel durch die Additive E und F stabilisiert sind.

So hergestellte Polymerdispersionen sind gut kompatibel mit den üblichen wasserbasierenden Anstrichmitteln oder Tinten. Sie können deshalb bei hohen Pigmentgehalten als farbgebende Komponente zugesetzt werden. Sie können aber je nach eingestellter Filmbildetemperatur der Polymermischung auch direkt zur Bildung von Beschichtungen eingesetzt werden oder mit Wasser und Hilfsmitteln verdünnt als Tinten in verschiedenen Druckverfahren eingesetzt werden.

Gegenstand der Erfindung ist daher auch die Verwendung der erfindungsgemäßen Polymerdispersion zur Einfärbung von wässrigen Anstrichmitteln, Lacken, Dispersionsfarben, Druckfarben und Tinten, insbesondere Ink-Jet-Tinten, vorzugsweise zum Färben von Papier, Holz und Leder.

Aus den erfindungsgemäßen Dispersionen können durch Entfernung des Lösungsmittels und Trocknen, z.B. Sprühtrocknen, auch farbige Polymerpartikel hergestellt werden.

Gegenstand der Erfindung sind daher auch farbige Polymerpartikel, bestehend im wesentlichen aus 5 bis 95 Gew.-% Pigment und einer polymerisierten Beschichtung, hergestellt durch Polymerisation von 2,5 bis 50 Gew.-% eines polymerisierbaren Wachses D, bei der die polymerisierbare Funktion eine ethylenisch ungesättigte Gruppe ist, mit 2,5 bis 50 Gew.-% eines Monomers B,
wie vorstehend definiert, mit einer funktionellen Gruppe, die mit der ethylenisch ungesättigten Gruppe von D reagieren kann, wobei die Gewichtsprozente jeweils auf das Gesamtgewicht der beschichteten Pigmentpartikel bezogen sind und die Summe der Gewichtsprozente 100 Gew.-% nicht überschreitet, und wobei das polymerisierbare Wachs D ein Umsetzungsprodukt aus einem Polyol, langkettigen aliphatischen Carbonsäuren und mindestens einer ethylenisch ungesättigten Carbonsäure ist, das durch den Zusatz einer Dicarbonsäure oligomerisiert sein kann.

Je nach Art der Aufarbeitung und Trocknung können auf den farbigen Polymerpartikeln noch 0 bis 20 Gew.-% der nichtionischen Additive b) und/oder der anionischen Additive c) sowie weitere übliche Hilfsmittel, wie z.B. Konservierungsmittel, vorhanden sein.

Die erfindungsgemäßen Polymerpartikel werden als Farbmittel insbesondere in Pulverlacken, UV-härtenden Lacken, elektrophotographischen Tonern und Entwicklern, in Ink-Jet-Tinten, insbesondere auf wässriger und nichtwässriger Basis, in Mikroemulsions- und Hot-Melt-Ink-Jet-Tinten, eingesetzt.

Mikroemulsionstinten basieren auf organischen Lösemitteln, Wasser und ggf. einer zusätzlichen hydrotropen Substanz (Grenzflächenvermittler). Mikroemulsionstinten enthalten im Allgemeinen 0,5 bis 30 Gew.-%, vorzugsweise 1 bis 15 Gew.-%, der erfindungsgemäßen Polymerpartikel, 5 bis 99 Gew.-% Wasser und 0,5 bis 94,5 Gew.-% organisches Lösungsmittel und/oder hydrotrope Verbindung.

"Solvent based" Ink-Jet-Tinten enthalten vorzugsweise 0,5 bis 30 Gew.-% der erfindungsgemäßen Polymerpartikel, 85 bis 99,5 Gew.-% organisches Lösungsmittel und/oder hydrotrope Verbindungen.

Hot-Melt-Tinten basieren meist auf Wachsen, Fettsäuren, Fettalkoholen oder Sulfonamiden, die bei Raumtemperatur fest sind und bei Erwärmen flüssig werden, wobei der bevorzugte Schmelzbereich zwischen ca. 60°C und ca. 140°C liegt. Hot-Melt Ink-Jet-Tinten bestehen z.B. im Wesentlichen aus 20 bis 90 Gew.-% Wachs und 1 bis 10 Gew.-% der erfindungsgemäßen Polymerpartikel. Weiterhin können 0 bis 20 Gew.-% eines zusätzlichen Polymers, bis 5 Gew.-% Dispergierhilfsmittel, 0 bis 20 Gew.-% Viskositätsveränderer, 0 bis 20 Gew.-% Plastifizierer, 0 bis 10 Gew.-% Klebrigkeitszusatz, 0 bis 10 Gew.-% Transparenzstabilisator (verhindert z.B. Kristallisation der Wachse) sowie 0 bis 2 Gew.-% Antioxidans enthalten sein.

In den Ink-Jet-Tinten können die erfindungsgemäßen Polymerpartikel auch mit anderen Farbmitteln wie beispielsweise anorganische oder organische Pigmente und/oder Farbstoffe nuanciert sein. Sie werden dabei in Tintensets, bestehend aus gelben, magenta, cyan und schwarzen Tinten, welche als Farbmittel Pigmente und/oder Farbstoffe enthalten, verwendet. Des Weiteren können sie in Tintensets verwendet werden, die zusätzlich eine oder mehrere der so genannten "spot colors" in den Farben beispielsweise orange, grün, blau, golden und silber enthalten.

Bevorzugt ist dabei ein Satz von Drucktinten, dessen schwarze Präparation bevorzugt Ruß als Farbmittel enthält, insbesondere einen Gas- oder Furnaceruß; dessen Cyan-Präparation bevorzugt ein Pigment aus der Gruppe der Phthalocyanin-, Indanthron- oder Triarylcarboniumpigmente enthält, insbesondere die Colour Index Pigmente Pigment Blue 15, Pigment Blue 15:1, Pigment Blue 15:2, Pigment Blue 15:3, Pigment Blue 15:4, Pigment Blue 16, Pigment Blue 56, Pigment Blue 60 oder Pigment Blue 61; dessen Magenta-Präparation bevorzugt ein Pigment aus der Gruppe der Monoazo-, Disazo-, β-Naphthol, Naphthol AS-, verlackten Azo-, Metallkomplex-, Benzimidazolon-, Anthanthron-, Anthrachinon-, Chinacridon-, Dioxazin-, Perylen-, Thioindigo-, Triarylcarbonium- oder Diketopyrrolopyrrolpigmente enthält, insbesondere die Colour Index Pigmente Pigment Red 2, Pigment Red 3, Pigment Red 4, Pigment Red 5, Pigment Red 9, Pigment Red 12, Pigment Red 14, Pigment Red 38, Pigment Red 48:2, Pigment Red 48:3, Pigment Red 48:4, Pigment Red 53:1, Pigment Red 57:1, Pigment Red 112, Pigment Red 122, Pigment Red 144, Pigment Red 146, Pigment Red 147, Pigment Red 149, Pigment Red 168, Pigment Red 169, Pigment Red 170, Pigment Red 175, Pigment Red 176, Pigment Red 177, Pigment Red 179, Pigment Red 181, Pigment Red 184, Pigment Red 185, Pigment Red 187, Pigment Red 188, Pigment Red 207, Pigment Red 208, Pigment Red 209, Pigment Red 210, Pigment Red 214, Pigment Red 242, Pigment Red 247, Pigment Red 253, Pigment Red 254, Pigment Red 255, Pigment Red 256, Pigment Red 257, Pigment Red 262, Pigment Red 263, Pigment Red 264, Pigment Red 266, Pigment Red 269, Pigment Red 270, Pigment Red 272, Pigment Red 274, Pigment Violet 19, Pigment Violet 23 oder Pigment Violet 32; dessen Gelb-Präparation bevorzugt ein Pigment aus der Gruppe der Monoazo-, Disazo-, Benzimidazolin-, Isoindolinon-, Isoindolin- oder Perinonpigmente enthält, insbesondere die Colour Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 120, Pigment Yellow 126, Pigment Yellow 127, Pigment Yellow 128, Pigment Yellow 139, Pigment Yellow 151, Pigment Yellow 154, Pigment Yellow 155, Pigment Yellow 173, Pigment Yellow 174, Pigment Yellow 175, Pigment Yellow 176, Pigment Yellow 180, Pigment Yellow 181, Pigment Yellow 191, Pigment Yellow 194, Pigment Yellow 196, Pigment Yellow 213 oder Pigment Yellow 219 ; dessen Orange-Präparation bevorzugt ein Pigment aus der Gruppe der Disazo-, β-Naphthol-, Naphthol AS-, Benzimidazolon- oder Perinonpigmente enthält, insbesondere die Colour Index Pigmente Pigment Orange 5, Pigment Orange 13, Pigment Orange 34, Pigment Orange 36, Pigment Orange 38, Pigment Orange 43, Pigment Orange 62, Pigment Orange 68, Pigment Orange 70, Pigment Orange 71, Pigment Orange 72, Pigment Orange 73, Pigment Orange 74 oder Pigment Orange 81; dessen Grün-Präparation bevorzugt ein Pigment aus der Gruppe der Phthalocyaninpigmente enthält, insbesondere die Colour Index Pigmente Pigment Green 7 oder Pigment Green 36.

Zusätzlich können die Tintensets noch Nuancierfarbstoffe enthalten, vorzugsweise aus der Gruppe C.I. Acid Yellow 17 und C.I. Acid Yellow 23; C.I. Direct Yellow 86, C.I. Direct Yellow 98 und C.I. Direct Yellow 132; C.I. Reactive Yellow 37; C.I. Pigment Yellow 17, C.I. Pigment Yellow 74, C.I. Pigment Yellow 83, C.I. Pigment Yellow 97, C.I. Pigment Yellow 120, C.I. Pigment Yellow 139, C.I. Pigment Yellow 151, C.I. Pigment Yellow 155 und C.I. Pigment Yellow 180; C.I. Direct Red 1, C.I. Direct Red 11, C.I. Direct Red 37, C.I. Direct Red 62, C.I. Direct Red 75, C.I. Direct Red 81, C.I. Direct Red 87, C.I. Direct Red 89, C.I. Direct Red 95 und C.I. Direct Red 227; C.I. Acid Red 1, C.I. Acid Red 8, C.I. Acid Red 80, C.I. Acid Red 81, C.I. Acid Red 82, C.I. Acid Red 87, C.I. Acid Red 94, C.I. Acid Red 115, C.I. Acid Red 131, C.I. Acid Red 144, C.I. Acid Red 152, C.I. Acid Red 154, C.I. Acid Red 186, C.I. Acid Red 245, C.I. Acid Red 249 und C.I. Acid Red 289; C.I. Reactive Red 21, C.I. Reactive Red 22, C.I. Reactive Red 23, C.I. Reactive Red 35, C.I. Reactive Red 63, C.I. Reactive Red 106, C.I. Reactive Red 107, C.I. Reactive Red 112, C.I. Reactive Red 113, C.I. Reactive Red 114, C.I. Reactive Red 126, C.I. Reactive Red 127, C.I. Reactive Red 128, C.I. Reactive Red 129, C.I. Reactive Red 130, C.I. Reactive Red 131, C.I. Reactive Red 137, C.I. Reactive Red 160, C.I. Reactive Red 161, C.I. Reactive Red 174 und C.I. Reactive Red 180.

Die erfindungsgemäßen Polymerpartikel eignen sich zur Herstellung von Tinten für den Einsatz in allen konventionellen Ink-Jet-Druckern, insbesondere für solche, die auf dem Bubble-Jet- oder Piezo-Verfahren beruhen.

Die erfindungsgemäßen Polymerpartikel sind auch geeignet als Farbmittel in elektrophotographischen Tonern und Entwicklern, wie beispielsweise Ein- oder Zweikomponentenpulvertonern (auch Ein- oder Zweikomponenten-Entwickler genannt), Magnettoner, Flüssigtoner, Polymerisationstoner sowie Spezialtoner. Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im nachhinein mit diesen Zusätzen modifiziert werden.

Des weiteren sind die erfindungsgemäßen Polymerpartikel geeignet als Farbmittel in Pulvern und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Leder, Textilmaterial, Papier oder Kautschuk zur Anwendung kommen.

Allgemeine Arbeitsvorschrift für die Beispiele 1 bis 10 (Verfahren 1):

### (a) Herstellung einer Pigmentdispersion:

Das Pigment wird, entweder als Pulver oder als Presskuchen, zusammen mit den Dispergiermitteln, dem organischen Lösemittel und den anderen Zusätzen in entionisiertem Wasser angeteigt und dann mit einem Dissolver oder einer anderen geeigneten Apparatur homogenisiert und vordispergiert. Die anschließende Feindispergierung erfolgt mit Hilfe einer Perlmühle (z.B. mit einer MiniZETA 03 der Firma Netzsch) oder einem anderen geeigneten Dispergieraggregat, wobei die Mahlung unter Kühlung bis zur gewünschten Teilchengrößenverteilung der Pigmentpartikel erfolgt. Im Anschluss wird die Dispersion mit entionisiertem Wasser auf die gewünschte Pigmentendkonzentration eingestellt.

### (b) Herstellung einer wachsgecoateten Pigmentdispersion:

Polymerisierbares Wachs D (z.B. ®Licomont ER 165 mit SZ:10,0) wird in einem Glaskessel bei einer Temperatur von etwa 120°C unter langsamem Rühren aufgeschmolzen.

Nichtionisches Tensid (Niotensid, Additiv E) und Aniontensid (Additiv F) werden in einem zweiten Behältnis bei 90°C in einem Lösemittel (z.B. 1,2-Propylenglykol) gelöst und mit KOH versetzt.

Das dabei entstehende Emulgatorengemisch wird unter intensiver Rührung bei ca. 100-120°C in die Wachsschmelze eingerührt.

Die dabei entstehende Schmelze wird langsam in die auf etwa 90°C gebrachte Pigmentdispersion (a) gegossen und für kurze Zeit bei dieser Temperatur weitergerührt. Anschließend werden die weiteren Zusatzstoffe (z.B. Konservierungsmittel) zugesetzt.

### (c) Polymerisation mit Monomer B:

Wasser, Aniontensid (neutralisiert) und 15 % vom Monomergemisch B1 werden in einen Reaktor gegeben und auf etwa 75°C erhitzt. Ammoniumperoxodisulfat wird in entmineralisiertem Wasser gelöst und in die Reaktionsmischung gegeben. Die Mischung wird auf 80°C aufgeheizt. Nach dem Anspringen der Reaktion wird das restliche Monomerengemisch B1 über 1 h in den Reaktor eindosiert. Danach wird über 30 bis 45 min die wachsgecoatete Pigmentdispersion aus (b) bei einer Temperatur oberhalb von 78°C eingearbeitet. Im Anschluss daran wird Monomerengemisch B2 bei 80°C eindosiert und 2 h bei dieser Temperatur gerührt. Nichtumgesetztes Monomer wird abdestilliert und die Reaktionsmischung auf unter 35°C abgekühlt. Ascorbinsäure und H₂O₂ werden zugesetzt, die Mischung 30 min gerührt, Konservierungsmittel zugesetzt und der pH-Wert durch Zugabe von KOH auf 7 eingestellt. Es folgt eine Filtration durch einen 50 µm-Filter.

### Beispiele 1 bis 5:

### a) Herstellung einer PY 155 - Pigmentdispersion:

| | |
|---|---|
| C.I. Pigment Yellow 155 | 20 |
| Niotensid | 10 |
| Aniontensid | 2 |

| | |
|---|---|
| ®Mergal K7 | 0,1 |
| ®Mergal K10N | 0,1 |
| 1,2-Propylenglykol | 10 |
| Wasser | 57,8 |

### b) Herstellung einer wachsgecoateten PY 155-Pigmentdispersion:

| | |
|---|---|
| ®Licomont ER 165 | 240 |
| Aniontensid | 16 |
| Niotensid | 34 |
| KOH 43 %ig | 10 |
| Wasser | 300 |
| Pigmentdispersion aus (a) | 1800 |

| | Coating % | Pigment % | Emulgator % | Typ | TSC % |
|---|---|---|---|---|---|
| Beispiel 1: | 10 | 15 | 2,3 | 1 | 28 |
| Beispiel 2: | 10 | 15 | 2,3 | 1 | 28 |
| Beispiel 3: | 10 | 15 | 2,3 | 4 | 28 |
| Beispiel 4: | 10 | 15 | 2,3 | 3 | 28 |
| Beispiel 5: | 7 | 15,6 | 1,4 | 2 | 25 |

### Emulgator: Niotensid + Aniontensid

- Niotensid:: ®Genapol T 110,
- Aniontensid:: Genapol LRO (Typ 1), ®Dispersogen LFES (Typ 2), Dispersogen LFH (Typ 3), Dispersogen T 160 (Typ 4).

Genapol und Dispersogen sind Handelsmarken der Clariant.
®Licomont ER 165 = Pentaerythrit-2,5-montanat-acrylat
(Licomont ist eine Handelsmarke der Clariant);
TSC = total solid content = Festkörpergehalt.

### (c) Herstellung einer Polymerdispersion:

| | |
|---|---|
| Wachsgecoatete Pigmentdispersion PY 155 aus (b): | 450 |
| Dispersogen LFH 28 %ig | 12,5 |
| Monomer B1 | 20 |
| Monomer B2 | 10 |
| Ammoniumperoxodisulfat | 0,95 |
| Ascorbinsäure | 0,7 |
| Wasser | 400 |
| H₂O₂ 35 %ig | 3,5 |
| Konservierungsmittel | 0,3 |

| | |
|---|---|
| Monomer B1: Methylmethacrylat 9,4, Ethylacrylat 9,4, Methacrylsäure 1,2 Monomer B2: Methylmethacrylat 5, Ethylacrylat 5 | |

Festkörpergehalt: 14 - 15 %; Pigmentgehalt: 7 - 8 %; MFT ca. 25.

### Beispiele 6 und 7:

### a) Herstellung einer Pigment Red 122 - Pigmentdispersion:

| | |
|---|---|
| C.I. Pigment Red 122 | 20 |
| Niotensid | 10 |
| Aniontensid | 2 |
| Mergal K7 | 0,1 |
| Mergal K10N | 0,1 |
| 1,2-Propylenglykol | 10 |
| Wasser | 57,8 |

### b) Herstellung einer wachsgecoateten PR 122-Pigmentdispersion:

| | |
|---|---|
| Licomont ER 165 | 240 |
| Aniontensid | 16 |
| Niotensid | 34 |
| KOH 43%ig | 10 |
| Wasser | 300 |
| Pigmentdispersion aus (a): | 1800 |

| | Coating % | Pigment % | Emulgator % | Typ | TSC % |
|---|---|---|---|---|---|
| Beispiel 6: | 10 | 15 | 2,3 | 1 | 30 |
| Beispiel 7: | 10 | 15 | 2,3 | 4 | 30 |

- Niotensid:: Genapol T 110;
- Aniontensid:: Genapol LRO (Typ 1), Dispersogen T 160 (Typ 4).

### (c) Herstellung einer Polymerdispersion:

| | |
|---|---|
| Wachsgecoatete Pigmentdispersion PR 122: | 450 |
| Dispersogen LFH 28 %ig | 12,5 |
| Monomer B1 | 40 |
| Monomer B2 | 20 |
| Ammoniumperoxodisulfat | 0,83 |
| Ascorbinsäure | 0,7 |
| Wasser | 400 |
| H₂O₂ 35 %ig | 3,5 |
| Konservierungsmittel | 0,3 |

| | |
|---|---|
| Monomer B1: Methylmethacrylat 19,2, Ethylacrylat 18,8, Methacrylsäure 2 Monomer B2: Methylmethacrylat 9,9, Ethylacrylat 10,1 | |

Festkörpergehalt: 18 - 19 %; Pigmentgehalt: 7 - 8 %; MFT ca. 25.

### Beispiel 8

### (a) Herstellung einer Pigment Blue 15:3 - Pigmentdispersion:

| | |
|---|---|
| C.I. Pigment Blue 15:3 | 20 |
| Niotensid | 10 |
| Aniontensid | 2 |
| Mergal K7 | 0,1 |
| Mergal K10N | 0,1 |
| 1,2-Propylenglykol | 10 |
| Wasser | 57,8 |

### (b) Herstellung einer wachsgecoateten PB 15:3-Pigmentdispersion:

| | |
|---|---|
| Licomont ER 165 | 240 |
| Aniontensid | 16 |
| Niotensid | 34 |
| KOH 43 %ig | 10 |
| Wasser | 300 |
| Pigmentdispersion nach (a) | 1800 |

Coating: 10 %; Pigment: 15 %; Emulgator, Typ (1): 2,3 %.

### (c) Herstellung einer Polymerdispersion:

| | |
|---|---|
| Wachsgecoatete Pigmentdispersion PB 15:3: | 450 |
| Dispersogen LFES 28 %ig | 25 |
| Monomer B1 | 40 |
| Monomer B2 | 70 |
| Ammoniumperoxodisulfat | 0,83 |
| Ascorbinsäure | 0,7 |
| Wasser | 413 |
| H₂O₂ 35 %ig | 3,5 |
| Konservierungsmittel | 0,3 |

| | |
|---|---|
| Monomer B1: Methylmethacrylat 19,2, Ethylacrylat 5,2, Methacrylsäure 2,0 Monomer B2: Methylmethacrylat 34,65, Ethylacrylat 35,35 | |

Festkörpergehalt: 22 - 23 %; Pigmentgehalt: 6 - 7 %; MFT ca. 22.

### Beispiel 9

### (a) Herstellung einer Pigment Black 7 - Pigmentdispersion:

| | |
|---|---|
| C.I. Pigment Black 7 | 20 |
| Niotensid | 10 |
| Aniontensid | 2 |
| Mergal K7 | 0,1 |
| Mergal K10N | 0,1 |
| 1,2-Propylenglykol | 10 |
| Wasser | 57,8 |

### (b) Herstellung einer wachsgecoateten Pigment Black 7-Pigmentdispersion:

| | |
|---|---|
| Licomont ER 165 | 240 |
| Aniontensid | 16 |
| Niotensid | 34 |
| KOH 43 %ig | 10 |
| Wasser | 300 |
| Pigmentdispersion nach (a) | 1800 |

Coating: 10 %; Pigment: 15 %; Emulgator, Typ (1): 2,3 %.

### (c) Herstellung einer Polymerdispersion:

| | |
|---|---|
| Wachsgecoatete Pigmentdispersion PB 7: | 450 |
| Dispersogen LFH 28 %ig | 6,4 |
| Monomer B1 | 15,4 |
| Monomer B2 | - |
| Ammoniumperoxodisulfat | 0,60 |
| Ascorbinsäure | 0,7 |
| Wasser | 413 |
| H₂O₂ 35 %ig | 3,5 |
| Konservierungsmittel | 0,3 |

| | |
|---|---|
| Monomer B1: Methylmethacrylat 8,95, Butylacrylat 5,2, Methacrylsäure 1,25 | |

Festkörpergehalt: 10 - 11 %; Pigmentgehalt: 6 - 7 %.

### Beispiel 10: PY 155

Ein Teil der Monomere B wird in das Wachscoating mit aufgenommen. Die hier eingesetzte Monomermenge wird dann bei der nachfolgenden Polymerisation nicht mehr zugesetzt.

| | |
|---|---|
| ®Licomont ER 165 | 105 |
| Aniontensid | 6,6 |
| Niotensid | 14 |
| KOH 43 %ig | 2,9 |
| Methylmethacrylat | 42,7 |
| Wasser | 250 |
| Pigmentdispersion aus Beispiel 1 (a) | 1576 |
| Konservierungsmittel | 2,1 |

Die Schritte (b) und (c) erfolgen analog Beispiel 1.

### Beispiel 11: Pigment Black 7

Ein Teil der Monomere B wird in das Wachscoating mit aufgenommen. Die hier eingesetzte Monomermenge wird dann bei der nachfolgenden Polymerisation nicht mehr zugesetzt:

| | |
|---|---|
| ®Licomont ER 165 | 50,12 |
| Aniontensid | 3,12 |
| Niotensid | 6,67 |
| KOH 43 %ig | 1,4 |
| Methylmethacrylat | 10,15 |
| Butylacrylat | 10,15 |
| Wasser | 119 |
| Pigmentdispersion aus Beispiel 1 (a) | 1576 |
| Konservierungsmittel | 1,2 |

Die Schritte (b) und (c) erfolgen analog Beispiel 9.

Allgemeine Arbeitsvorschrift für die Beispiele 12 bis 19 (Verfahren 2):
(a) Herstellung einer Pigmentdispersion:
   Analog der in Verfahren 1 beschriebenen Vorgehensweise.
(b) Herstellung einer Miniemulsion:
   Zur Herstellung einer Wachs-Miniemulsion wird das polymerisierbare Wachs D in geschmolzener Form in eine wässrige Lösung der nichtionischen und anionischen Tenside oberhalb der Schmelztemperatur des Wachses D eingerührt und
   gegebenenfalls dispergiert, wobei eine Öl-in-Wasser-Emulsion entsteht.
(c) Herstellung einer wachsgecoateten Pigmentdispersion:
   Die in (b) hergestellte Miniemulsion wird mit restlichem nichtionischem und
   anionischem Tensid versetzt und die in (a) hergestellte Pigmentdispersion zudosiert. Mit Hilfe eines Mahl- oder Dispergieraggregates wird das Wachs auf die Pigmentteilchen aufgemahlen.
(d) Herstellung einer Polymerdispersion:
   Analog der in Verfahren 1 beschriebenen Vorgehensweise.

Die in den Beispielen 1 bis 8 beschriebenen Polymerdispersionen wurden nach der Vorgehensweise von Verfahren 2 hergestellt: Beispiele 12 bis 19.

### Anwendungsbeispiele:

### (A) Drucktinten:

Die erfindungsgemäßen Polymerdispersionen sowie als Vergleich die entsprechenden Standarddispersionen (vorstehende Schritte a) wurden in Drucktinten eingearbeitet. Nur bei den erfindungsgemäßen Polymerdispersionen konnte ein Durchschlagen der Farbe durch das Papier vermieden werden. Es entstand ein glänzendes, wasserfestes Bild. Bilder mit den Standarddispersionen waren nicht wasserfest und zeigten praktisch keinen Glanz.

### (B) Flüssige Lacke und Dispersionsfarben:

Die erfindungsgemäßen Polymerdispersionen sowie als Vergleich die entsprechenden Standarddispersionen (a) wurden in Lacke und Dispersionsfarben eingearbeitet. Der Farbanstrich mit den erfindungsgemäßen Polymerdispersionen war wesentlich wasserfester als mit den Standarddispersionen.

### (C) Pulverlacke:

Die erfindungsgemäßen Polymerdispersionen sowie als Vergleich die entsprechenden Standarddispersionen (a) wurden sprühgetrocknet und in Pulverlacke eingearbeitet.

Bei den erfindungsgemäßen Pulverlacken war die Farbausbeute höher und die chemische Fixierung in der Matrix nach dem Einbrennen wesentlich besser als bei den Standardpulverlacken.

## Patentansprüche

1. Farbige Polymerdispersion, enthaltend als wesentliche Bestandteile
(a) ein Farbpolymer, hergestellt durch Polymerisation von Monomer A mit
Monomer B, wobei
Monomer A ein Pigment P bedeutet, das mit einem polymerisierbaren Wachs D beschichtet ist, bei dem die polymerisierbare Funktion eine ethylenisch ungesättigte Gruppe ist, und
Monomer B eine ethylenisch ungesättigte Verbindung aus der Gruppe der Acrylate und Methacrylate ist;
(b) mindestens ein nichtionisches oberflächenaktives Additiv E auf der Basis von Polyethern und/oder Polyglycerinen;
(c) mindestens ein anionisches oberflächenaktives Additiv F auf der Basis von Sulfonaten, Sulfaten, Phosphonaten, Phosphaten oder Carboxylaten;
(d) Wasser.

2. Polymerdispersion nach Anspruch 1, **gekennzeichnet durch** 2 bis 60 Gew.% der Komponente (a),
0,1 bis 15 Gew.-% der Komponente (b),
0,1 bis 15 Gew.-% der Komponente (c),
10 bis 90 Gew.-% Wasser,
0 bis 20 Gew.-% üblicher Hilfsmittel,
wobei die Summe der Gewichtsprozente 100 Gew.-% nicht überschreitet.

3. Polymerdispersion nach Anspruch 1 oder 2, **dadurch gekennzeichnet, dass** das Pigment P ein organisches Buntpigment, ein anorganisches Buntpigment, ein Weißpigment, ein Rußpigment oder eine Kombination mehrerer Pigmente ist.

4. Polymerdispersion nach einem oder mehreren der Ansprüche 1 bis 3, **dadurch gekennzeichnet, dass** das Pigment P ein Azopigment, ein Anthanthronpigment, ein Anthrapyrimidinpigment, ein Chinacridonpigment, ein Chinophthalonpigment, ein Diketopyrrolopyrrolpigment, ein Dioxazinpigment, ein Indanthronpigment, ein Isoindolinpigment, ein Isoindolinonpigment, ein Isoviolanthronpigment, ein Perylenpigment, ein Perinonpigment, ein Phthalocyaninpigment, ein Pyranthronpigment, ein Pyrazolochinazolonpigment, ein Thioindigopigment, ein Triarylcarboniumpigment oder eine Kombination davon ist.

5. Polymerdispersion nach einem oder mehreren der Ansprüche 1 bis 4, **dadurch gekennzeichnet, dass** das Pigment P ein Gelb-, Cyan-, Magenta- oder Schwarz-Pigment ist.

6. Polymerdispersion nach einem oder mehreren der Ansprüche 1 bis 5, **dadurch gekennzeichnet, dass** das polymerisierbare Wachs D ein Umsetzungsprodukt aus einem Polyol, langkettigen aliphatischen Carbonsäuren und mindestens einer ethylenisch ungesättigten Carbonsäure ist, das durch den Zusatz einer Dicarbonsäure oligomerisiert sein kann.

7. Polymerdispersion nach einem oder mehreren der Ansprüche 1 bis 6, **dadurch gekennzeichnet, dass** das Farbpolymer (a) zu 5 bis 95 Gew.-% aus Pigment P, zu 2,5 bis 50 Gew.-% aus der Beschichtung D, und zu 2,5 bis 50 Gew.-% aus dem mit D umgesetzten Monomer B besteht.

8. Verfahren zur Herstellung einer Polymerdispersion nach einem oder mehreren der Ansprüche 1 bis 7, **dadurch gekennzeichnet, dass** das Pigment P in wässriger Suspension mit zumindest einem Teil der Komponenten b) und c) unter Einwirkung von Scherkräften feinverteilt wird, die so hergestellte Pigmentdispersion mit dem polymerisierbaren Wachs D, gegebenenfalls einem Teil von Monomer B, und gegebenenfalls unter Zugabe weiterer Komponente b) und/oder c) bei einer Temperatur oberhalb des Erweichungspunktes von D homogenisiert wird, die so hergestellte gecoatete Pigmentdispersion mit einer Mischung aus Wasser, Monomer B, und gegebenenfalls weiterer Komponente c) und/oder d) versetzt und polymerisiert wird.

9. Verfahren zur Herstellung einer Polymerdispersion nach einem oder mehreren der Ansprüche 1 bis 7, **dadurch gekennzeichnet, dass** aus dem geschmolzenem polymerisierbaren Wachs D, den Komponenten b) und c) eine Miniemulsion hergestellt wird, welche dann zusammen mit einer wässrigen Suspension des Pigments P einer Feinverteilung unter Einwirkung von Scherkräften unterzogen wird, die so hergestellte gecoatete Pigmentpräparation mit einer Mischung aus Wasser, Monomer B, und gegebenenfalls weiterer Komponente c) und/oder d) versetzt und polymerisiert wird.

10. Verwendung einer Polymerdispersion nach einem oder mehreren der Ansprüche 1 bis 7 zur Einfärbung von wässrigen Anstrichmitteln, Lacken, Dispersionsfarben, Druckfarben und Tinten, insbesondere Ink-Jet-Tinten, sowie zum Färben von Papier, Holz und Leder.

11. Farbige Polymerpartikel, bestehend aus 5 bis 95 Gew.-% Pigment und einer polymerisierten Beschichtung, hergestellt durch Polymerisation von 2,5 bis 50 Gew.-% eines polymerisierbaren Wachses D, bei der die polymerisierbare Funktion eine ethylenisch ungesättigte Gruppe ist, mit 2,5 bis 50 Gew.-% eines Monomers B mit einer funktionellen Gruppe, die mit der ethylenisch ungesättigten Gruppe von D reagieren kann, wobei die Gewichtsprozente jeweils auf das Gesamtgewicht der beschichteten Pigmentpartikel bezogen sind und die Summe der Gewichtsprozente 100 Gew.-% nicht überschreitet, und wobei das polymerisierbare Wachs D ein Umsetzungsprodukt aus einem Polyol, langkettigen aliphatischen Carbonsäuren und mindestens einer ethylenisch ungesättigten Carbonsäure ist, das durch den Zusatz einer Dicarbonsäure oligomerisiert sein kann, und wobei Monomer B ein Acrylat oder Methacrylat ist.

12. Verfahren zur Herstellung farbiger Polymerpartikel nach Anspruch 11,
**dadurch gekennzeichnet, dass** man eine farbige Polymerdispersion gemäß einem oder mehreren der Ansprüche 1 bis 7 von Lösungsmitteln befreit und trocknet.

13. Verwendung von Polymerpartikeln nach Anspruch 11 zum Färben von Ink-Jet-Tinten, Pulverlacken, UV-härtenden Lacken, elektrophotographischen Tonern und Entwicklern.

## Claims

1. A colored polymer dispersion comprising as essential constituents
(a) a color polymer prepared by polymerizing monomer A with monomer B, monomer A being a pigment P which is coated with a polymerizable wax D in which the polymerizable function is an ethylenically unsaturated group, and monomer B being an ethylenically unsaturated compound from the group of acrylates and methacrylates;
(b) at least one nonionic surface-active additive E based on polyethers and/or polyglycerols;
(c) at least one anionic surface-active additive F based on sulfonates, sulfates, phosphonates, phosphates or carboxylates;
(d) water.

2. The polymer dispersion as claimed in claim 1, **characterized by** 2% to 60% by weight of component (a),
0.1% to 15% by weight of component (b),
0.1% to 15% by weight of component (c),
10% to 90% by weight of water
0% to 20% by weight of typical auxiliaries,
the sum of the weight percentages not exceeding 100% by weight.

3. The polymer dispersion as claimed in claim 1 or 2, wherein the pigment P is an organic chromatic pigment, an inorganic chromatic pigment, a white pigment, a carbon black pigment or a combination of two or more pigments.

4. The polymer dispersion as claimed in one or more of claims 1 to 3, wherein the pigment P is an azo pigment, an anthanthrone pigment, an anthrapyrimidine pigment, a quinacridone pigment, a quinophthalone pigment, a diketopyrrolopyrrole pigment, a dioxazine pigment, an indanthrone pigment, an isoindoline pigment, an isoindolinone pigment, an isoviolanthrone pigment, a perylene pigment, a perinone pigment, a phthalocyanine pigment, a pyranthrone pigment, a pyrazoloquinazolone pigment, a thioindigo pigment, a triarylcarbonium pigment or a combination thereof.

5. The polymer dispersion as claimed in one or more of claims 1 to 4, wherein the pigment P is a yellow, cyan, magenta or black pigment.

6. The polymer dispersion as claimed in one or more of claims 1 to 5, wherein the polymerizable wax D is a reaction product of a polyol, long-chain aliphatic carboxylic acids, and at least one ethylenically unsaturated carboxylic acid, and may have been oligomerized by the addition of a dicarboxylic acid.

7. The polymer dispersion as claimed in one or more of claims 1 to 6, wherein the color polymer (a) is composed of 5% to 95% by weight of pigment P, of 2.5% to 50% by weight of the coating D, and of 2.5% to 50% by weight of the monomer B reacted with D.

8. A process for preparing a polymer dispersion as claimed in one or more of claims 1 to 7, which comprises subjecting the pigment P in aqueous suspension to fine division with at least one part of the components b) and c), under the action of shearing forces, homogenizing the thus prepared pigment dispersion with the polymerizable wax D, optionally a part of monomer B, and optionally with addition of further component b) and/or c) at a temperature above the softening point of D, adding a mixture of water, monomer B, and optionally further component c) and/or d) to the coated pigment dispersion thus prepared, and carrying out polymerization.

9. A process for preparing a polymer dispersion as claimed in one or more of claims 1 to 7, which comprises preparing a miniemulsion from the melted polymerizable wax D and components b) and c), then subjecting said miniemulsion, together with an aqueous suspension of the pigment P, to fine division, under the action of shearing forces, adding a mixture of water, monomer B, and optionally further component c) and/or d) to the coated pigment preparation thus prepared, and carrying out polymerization.

10. The use of a polymer dispersion as claimed in one or more of claims 1 to 7 for coloring aqueous coating materials, varnishes, emulsion paints, printing inks and liquid inks, more particularly ink-jet inks, and also for coloring paper, wood, and leather.

11. Colored polymer particles composed of 5% to 95% by weight of pigment and of a polymerized coating prepared by polymerizing 2.5% to 50% by weight of a polymerizable wax D, in which the polymerizable function is an ethylenically unsaturated group, with 2.5% to 50% by weight of a monomer B having a functional group which is able to react with the ethylenically unsaturated group of D, the weight percentages being based in each case on the total weight of the coated pigment particles, and the sum of the weight percentages not exceeding 100% by weight, the polymerizable wax D being a reaction product of a polyol, long-chain aliphatic carboxylic acids, and at least one ethylenically unsaturated carboxylic acid, and having possibly been oligomerized by the addition of a dicarboxylic acid, and monomer B being an acrylate or methacrylate.

12. A process for producing colored polymer particles as claimed in claim 11, which comprises freeing a colored polymer dispersion as claimed in one or more of claims 1 to 7 from solvents and subjecting it to drying.

13. The use of polymer particles as claimed in claim 11 for coloring ink-jet inks, powder coating materials, UV-curing varnishes, electrophotographic toners, and developers.

## Revendications

1. Dispersion polymère colorée, contenant, comme constituants essentiels,
(a) un polymère coloré, préparé par polymérisation de monomère A avec un monomère B, le monomère A signifiant un pigment P qui est revêtu par une cire D polymérisable, où la fonction polymérisable est un groupe éthyléniquement insaturé, et le monomère B est un composé éthyléniquement insaturé du groupe des acrylates et des méthacrylates ;
(b) au moins un additif tensioactif E non ionique à base de polyéthers et/ou de polyglycérols ;
(c) au moins un additif tensioactif F anionique à base de sulfonates, de sulfates, de phosphonates, de phosphates ou de carboxylates ;
(d) de l'eau.

2. Dispersion polymère selon la revendication 1, **caractérisée par** 2 à 60% en poids de composant (a),
0,1 à 15% en poids de composant (b),
0,1 à 15% en poids de composant (c)
10 à 70% en poids d'eau,
0 à 20% en poids d'adjuvants usuels,
la somme des % en poids ne dépassant pas 100% en poids.

3. Dispersion polymère selon la revendication 1 ou 2, **caractérisée en ce que** le pigment P est un pigment coloré organique, un pigment coloré inorganique, un pigment blanc, un pigment de suie ou une combinaison de plusieurs pigments.

4. Dispersion polymère selon l'une ou plusieurs des revendications 1 à 3, **caractérisée en ce que** le pigment P est un pigment azo, un pigment d'anthanthrone, un pigment d'anthrapyrimidine, un pigment de quinacridone, un pigment de quinophtalone, un pigment de dicétopyrrolopyrrole, un pigment de dioxazine, un pigment d'indanthrone, un pigment d'iso-indoline, un pigment d'iso-indolinone, un pigment d'isoviolanthrone, un pigment de pérylène, un pigment de périnone, un pigment de phtalocyanine, un pigment de pyranthrone, un pigment de
pyrazoloquinazolone, un pigment de thio-indigo, un pigment de triarylcarbonium ou une combinaison de ceux-ci.

5. Dispersion polymère selon l'une ou plusieurs des revendications 1 à 4, **caractérisée en ce que** le pigment P est un pigment jaune, cyan, magenta ou noir.

6. Dispersion polymère selon l'une ou plusieurs des revendications 1 à 5, **caractérisée en ce que** la cire polymérisable D est un produit de transformation d'un polyol, d'acides carboxyliques aliphatiques à longue chaîne et d'au moins un acide carboxylique éthyléniquement insaturé qui peut être oligomérisé par l'addition d'un acide dicarboxylique.

7. Dispersion polymère selon l'une ou plusieurs des revendications 1 à 6, **caractérisée en ce que** le polymère coloré (a) est constitué par 5 à 95% en poids de pigment P, 2,5 à 50% en poids de revêtement D et 2,5 à 50% en poids du monomère B transformé avec D.

8. Procédé pour la préparation d'une dispersion polymère selon l'une ou plusieurs des revendications 1 à 7, **caractérisé en ce que** le pigment P est finement divisé en suspension aqueuse avec au moins une partie des composants b) et c) sous l'effet de forces de cisaillement, la dispersion pigmentaire ainsi préparée est homogénéisée avec la cire polymérisable D, le cas échéant une partie du monomère B et le cas échéant avec addition de composant(s) b) et/ou c) supplémentaire(s) à une température supérieure au point de ramollissement de D, la dispersion pigmentaire revêtue ainsi préparée est additionnée d'un mélange d'eau, de monomère B et le cas échéant de composant(s) b) et/ou c) supplémentaire(s) et polymérisée.

9. Procédé pour la préparation d'une dispersion polymère selon l'une ou plusieurs des revendications 1 à 7, **caractérisé en ce qu'**on prépare, à partir de la cire polymérisable D fondue, des composants b) et c), une mini-émulsion, qui est ensuite soumise, ensemble avec une suspension aqueuse du pigment P, à une division fine sous l'effet de forces de cisaillement, la préparation pigmentaire revêtue ainsi préparée est additionnée d'un mélange d'eau, de monomère B et le cas échéant de composant(s) b) et/ou c) supplémentaire(s) et polymérisée.

10. Utilisation d'une dispersion polymère selon l'une ou plusieurs des revendications 1 à 9 pour la coloration de peintures, de laques, de couleurs en dispersion, d'encres d'impression et d'encres, aqueux, en particulier d'encres pour jet d'encre, ainsi que pour la coloration de papier, de bois et de cuir.

11. Particules polymères colorées, constituées par 5 à 95% en poids de pigment et par un revêtement polymérisé, préparé par polymérisation de 2,5 à 50% en poids d'une cire polymérisable D, dans laquelle la fonction polymérisable est un groupe éthyléniquement insaturé, avec 2,5 à 50% en poids d'un monomère B présentant un groupe fonctionnel qui peut réagir avec le groupe éthyléniquement insaturé de D, les pourcentages en poids se rapportant à chaque fois au poids total des particules pigmentaires revêtues et la somme des % en poids ne dépassant pas 100% en poids et la cire polymérisable D étant un produit de transformation d'un polyol, d'acides carboxyliques aliphatiques à longue chaîne et d'au moins un acide carboxylique éthyléniquement insaturé, qui peut être oligomérisé par l'addition d'un acide dicarboxylique et le monomère B étant un acrylate ou un méthacrylate.

12. Procédé pour la préparation de particules polymères colorées selon la revendication 11, **caractérisé en ce qu'**on libère une dispersion polymère colorée selon l'une ou plusieurs des revendications 1 à 7 des solvants et on la sèche.

13. Utilisation de particules polymères selon la revendication 12 pour la coloration d'encres pour jet d'encre, de laques en poudre, de laques durcissant sous l'effet des UV, de toners et de révélateurs électrophotographiques.
